**Europäisches Patentamt**

**European Patent Office**

**Office européen des brevets**

(19)

(11) Veröffentlichungsnummer: **0 211 830**
**B1**

(12)

# EUROPÄISCHE PATENTSCHRIFT

(45) Veröffentlichungstag der Patentschrift:
**19.04.89**

(21) Anmeldenummer: **85901346.8**

(22) Anmeldetag: **13.02.85**

(86) Internationale Anmeldenummer:
**PCT/DE 85/00036**

(87) Internationale Veröffentlichungsnummer:
**WO 86/04956 (28.08.86 Gazette 86/19)**

(51) Int. Cl.⁴: **F 02 C 5/04**

(54) **GASTURBINENTRIEBWERK.**

(43) Veröffentlichungstag der Anmeldung:
**04.03.87 Patentblatt 87/10**

(45) Bekanntmachung des Hinweises auf die Patenterteilung:
**19.04.89 Patentblatt 89/16**

(84) Benannte Vertragsstaaten:
**AT BE CH FR GB LI LU NL SE**

(56) Entgegenhaltungen:
**CH-A-70 498**
**DE-A-2 046 632**
**DE-C-602 661**
**FR-A-466 140**
**GB-A-121 387**

(73) Patentinhaber: **CHRIST, Dieter, Hinter der Ältdörfer Kirche 30, D-6113 Babenhausen 1 (DE)**

(72) Erfinder: **CHRIST, Dieter, Hinter der Ältdörfer Kirche 30, D-6113 Babenhausen 1 (DE)**

(74) Vertreter: **Schumacher, Bernd, Dipl.- Ing., Am Schwaberg 13, D-6450 Hanau 6 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung liegt auf dem Gebiet der Brennkraftmaschinen. Die Erfindung bezieht sich auf eine Antriebseinheit mit einer Gasturbine mit intermittierender - also nicht kontinuierlicher - Verbrennung. Die Erfindung betrifft insbesondere ein Gasturbinentriebwerk für den Antrieb von Fahrzeugen und Flugzeugen.

Aus der FR-PS-466 140 ist eine Gasturbine bekannt. Bei dieser Gasturbine sind in einem Turbinengehäuse mehr als zwei Scheiben nebeneinander und konzentrisch zu einer Abtriebswelle angeordnet. Die Scheiben weisen jeweils Treilbrennkammern auf. Während der Umdrehung der drehbaren Scheiben kommen die Teilbrennkammern in eine Ausrichtung zueinander, in welcher sie eine vollständige Brennkammer bilden. Ein Teil der Scheiben ist fest mit dem Gehäuse verbunden; während der andere Teil der Scheiben starr mit der Abtriebswelle verbunden ist. Die durch Entspannen der Verbrennungsgase verrichtete Arbeit wird daher nur durch die drehbaren Scheiben auf die Abtriebswelle übertragen. Dagegen nehmen die nicht drehbaren Scheiben Reaktionskräfte auf, die über das Gehäuse nach außen abgegeben und dort aufgenommen und kompensiert werden müssen. Dies steht der Anwendung einer derartigen Gasturbine in Fahrzeugen entgegen.

Bekannt ist auch eine Explosionsturbine (CH-PS-70 498). Diese Turbine weist zwei Räder bzw. Scheiben auf. Die eine Scheibe ist starr auf der Abtriebswelle befestigt. Die andere Scheibe sitzt lose auf der Abtriebswelle und ist über ein Wendegetriebe mit der ersten Scheibe verbunden.

### Darstellung der Erfindung

Ein Ziel der Erfindung ist es, ein verbessertes Gasturbinentriebwerk zu schaffen.

Ein weiteres Ziel der Erfindung ist es, ein Gasturbinentriebwerk von kompakter und raumsparender Bauweise zu schaffen.

Ein weiteres Ziel der Erfindung ist es, ein Gasturbinentriebwerk zu schaffen, bei dem die innerhalb des Triebwerks auftretenden dynamischen Kräfte schon innerhalb des Triebwerks weitgehend kompensiert werden.

Diese und andere Ziele werden durch ein Gasturbinentriebwerk mit intermittierender Verbrennung erreicht, welches nachstehende Merkmale aufweist:

In einem Gehäuse sind mindestens zwei runde Scheiben drehbar und konzentrisch zu einer Abtriebswelle aufgenommen; die Abtriebswelle ragt mit wenigstens einem Wellenende aus dem Gehäuse hervor; die erste Scheibe und die letzte Scheibe liegen jeweils mit der äußeren Stirnseite dicht an der benachbarten Gehäusewand an; die Gehäusewand, die der erstenscheibe benachbart ist, weist Einlaßöffnungen zur Zufuhr von Luft-Brennstoff-Gemisch bzw. von Luft und Brennstoff sowie gegebenenfalls eine Zündvorrichtung auf; die Gehäusewand, die der letzten Scheibe benachbart ist, weist Auslaßöffnungen für Verbrennungsgase auf; die Scheiben sind mit der Abtriebswelle so verbunden, daß benachbarte Scheiben im entgegengesetzten Drehsinn - also gegenläufig - drehbar sind und daß alle Scheiben die Abtriebswelle im selben Drehsinn - also gleichsinnig - antreiben; im Umfangsbereich der ersten Scheibe ist wenigstens eine erste Teilbrennkammer ausgebildet, vorzugsweise sind jedoch mehrere, über den Umfang verteilt angeordnete erste Teilbrennkammern ausgebildet; diese ersten Teilbrennkammern haben auf der Schelbenseite, die der Gehäusewand zugewandt ist, jeweils einen Einlaß, der periodisch mit einem Verdichter in Verbindung steht; die ersten Teilbrennkammern haben auf der Scheibenseite, die der zweiten Scheibe zugewandt ist, einen Auslaß; dießer Auslaß ist in Drehrichtung der zweiten Scheibe geneigt angeordnet; in den auf die erste Scheibe folgenden Scheiben ist jeweils eine der Zahl der ersten Teilbrennkammern gleiche Zahl von weiteren Teilbrennkammern ausgebildet; bei den weiteren Teilbrennkammern ist der Einlaß jeweils an den Auslaß der Teilbrennkammer der vorangehenden Scheibe angepaßt, damit während der Umdrehung der Scheiben Einlaß und Auslaß der Teilbrennkammern zur Bildung einer vollständigen, über alle Scheiben sich erstreckenden Brennkammer fluchten; der Auslaß dieser weiteren Teilbrennkammern befindet sich jeweils an der Scheibenseite, die dem Einlaß gegenüberliegt, und der Auslaß ist jeweils entgegen der Drehrichtung der Scheibe geneigt; zwischen dem Einlaß und dem Auslaß der ersten und auch der weiteren Teilbrennkammern erfolgt innerhalb der Scheiben eine Umlenkung, wobei die Umlenkung in Teilbrennkammern benachbarter Scheiben entgegengesetzt ist: die Auslässe der Teilbrennkammern in der letzten Scheibe stehen während der Umdrehung der letzten Scheibe periodisch mit Auslaßöffnungen in der benachbarten Gehäusewand in Verbindung: die relativen Bewegungen der Scheiben zueinander und gegenüber dem Gehäuse sind derart aufeinander abgestimmt, daß in der Zündphase dle ersten Teilbrennkammern einlaßseitig geschlossen sind, die letzten Teilbrennkammern auslaßseitig geschlossen sind und die ersten Teilbrennkammern und die letzten Teilbrennkammern miteinander in Verbindung stehen und daß noch während der Verbindung der ersten und letzten Teilbrennkammern der Auslaß der letzten Teilbrennkammern geöffnet wird.

Bei diesem Gasturbinentriebwerk nach der Erfindung wird erreicht, daß, um dieselbe Leistung zu erzielen, die absoluten Drehzahlen der einzelnen Scheiben nur halb so groß sein müssen. Da die Scheiben mit geringerer Drehzahl rotieren können, ist bezogen auf eine bestimmte Betriebszeit des Gasturbinentriebwerks mit einem geringeren Verschleiß und damit mit einer höheren Lebensdauer des Triebwerks zu rechnen. Von Vorteil ist auch die universellere Anwendbarkeit des Gasturbinentriebwerks nach der Erfindung.

Eine Weiterentwicklung des Gasturbinentriebwerks nach der Erfindung besteht darin, daß die Scheiben als innenverzahnte Räder ausgebildet sind und direkt oder über ein Getriebe mit der Abtriebswelle gekoppelt sind. Da sich benachbarte Scheiben durch entsprechende Formung der Teilbrennkammern im entgegengesetzten Umlaufsinn bewegen, ist es für den Fall, daß die Scheiben über Zahnräder, die in mehreren Kränzen angeordnet sind, mit der Abtriebswelle gekoppelt sind, erforderlich, daß die Anzahl der Kränze an benachbarten Scheiben um eine ungerade Zahl differiert. Dadurch wird das Drehmoment der in alternierenden Richtungen rotierenden Scheiben mit entsprechender Über- oder Untersetzung gleichsinnig auf die Abtriebswelle übertragen.

Eine weitere Weiterbildung des Gasturbinentriebwerks besteht darin, daß die Zahl der Einlaßöffnungen in der einlaßseitigen Gehäusewand und die Zahl der Auslaßöffnungen in der auslaßseitigen Gehäusewand gleich ist der Zahl der Teilbrennkammern pro Scheibe.

Eine weitere Weiterbildung des Gasturbinentriebwerks nach der Erfindung besteht darin, daß die Umlenkung zwischen Einlaß und Auslaß der Teilbrennkammern innerhalb einer Scheibe 90° beträgt.

Schließlich besteht eine weitere Weiterbildung des Gasturbinentriebwerks nach der Erfindung darin, daß die Scheiben umfangsseitig im Gehäuse gelagert sind; durch diese Lagerung der Kreisscheiben im Bereich des Scheibenumfangs ist ein stabiler und verschleißarmer Rundlauf der Scheiben im Gehäuse gegeben. Damit werden unerwünschte Belastungen der Welle und deren Lager im wesentlichen vermieden.

## Kurze Beschreibung der Zeichnung:

Figur 1 ist eine Schnittansicht des Gasturbinentriebswerks nach der Erfindung längs der Linie I-I in Figur 2 mit Darstellung einer Brennkammer im Zündzeitpunkt;

Figur 2 ist ein Schnitt längs der Linie II-II in Figur 1;

Figur 3 ist ein Schnitt längs der Linie III-III in Figur 1;

Figur 4 ist ein Schnitt längs der Linie IV-IV in Figur 1;

Figur 5 ist ein Schnitt längs der Linie V-V in Figur 1;

Figur 6 ist ein Längsschnitt durch ein Zweikreis-Strahltriebwerk mit einem Gasturbinentriebwerk nach den Figuren 1 bis 5.

## Beschreibung eines bevorzugten Ausführungsbeispiels:

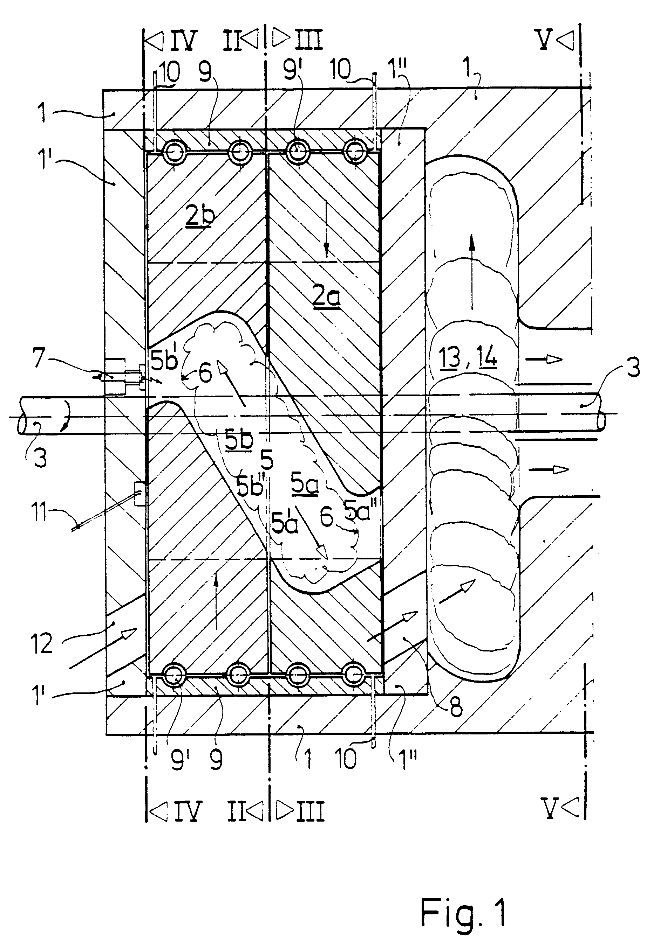

In den Figuren 1 bis 5 ist ein Gasturbinentriebwerk dargestellt. In dem mehrteiligen Gehäuse 1 des Triebswerks sind zwei Scheiben 2a, 2b konzentrisch zu einer das Gehäuse 1 durchsetzenden Abtriebswelle 3 eingepaßt. Umfangsseitig also am Scheibenumfang sind die beiden Scheiben 2a, 2b in einer Lagerung 9 geführt. Diese Lagerung 9 weist Kugeln 9' und eine Lagerschmierung 1b auf. Die in Figur 1 von links gesehen erste Scheibe 2b grenzt mit ihrer äußeren Stirnfläche dicht an eine deckelartige Gehäusewand 1' an und die rechts daneben angeordnete zweite oder letzte Scheibe 2a liegt mit ihrer äußeren Stirnseite an einer inneren Gehäusewand 1'' . Die einlaßseitige Gehäusewand 1' ist mit wenigstens einem Einlaß 12 für die Zufuhr von Luft-Brennstoff-Gemisch bzw. Luft einer Zündvorrichtung 7 und einer Kraftstoffeinspritz-Vorrichtung 11 versehen. Der Einlaß 12 steht periodisch mit einem in den Figuren 1 bis 5 nicht gezeigten Verdichter in Verbindung. Die Gehäuseplatte 1'' weist wenigstens einen Auslaß 8 auf. Außerhalb der inneren Gehäusewand 1'' ist ein Propeller 14 mit Flügeln 13 vorgesehen. Dieser Propeller steht in analoger Weise wie die Scheiben 2a und 2b mit der Abtriebswelle 3 in Wirkverbindung.

In der ersten Scheibe 2b ist eine erste Teilbrennkammer 5b ausgebildet. In der zweiten bzw. letzten Scheibe 2a ist eine zweite bzw. letzte Teilbrennkammer 5a ausgebildet. Beide Teilbrennkammern 5a, 5b bilden in der in Figur 1 dargestellten Anordnung eine vollständige Brennkammer, die sich über beide Scheiben 2a, 2b erstreckt. Die Brennkammer - wie dargestellt ist einlaßseitig, das heißt an der Einlaßöffnung 5b' der Teilbrennkammer 5b, von der Gehäusewand 1' und auslaßseitig, das heißt an der Auslaßöffnung 5a'', von der Gehäusewand 1'' geschlossen. Jede der Teilbrennkammern 5a, 5b weist die Form eines Kanals bzw. Schlauches auf, der um seine Längsachse einfach, und zwar um einen Winkel von etwa 90°, ungefähr in der Hitte einer Scheibe gekrümmt bzw. umgelenkt ist. Der Durchmesser des Kanals bzw. Schlauches ist nicht konstant, sondern verringert sich nach außen hin. Bei der zweiten bzw. letzten Scheibe 2b verringert sich der Kanaldurchmesser zur Einlaßöffnung 5b' hin und in der auslaßseitigen Scheibe zur Auslaßöffnung 5a''. Beide Teilbrennkammern 5a, 5b weisen etwa dieselbe Gestalt auf, wobei sie bei Flucht der Stellung zueinander ein um 180° rotationssymmetrisches Gebilde (Siehe Figur 1) ergeben.

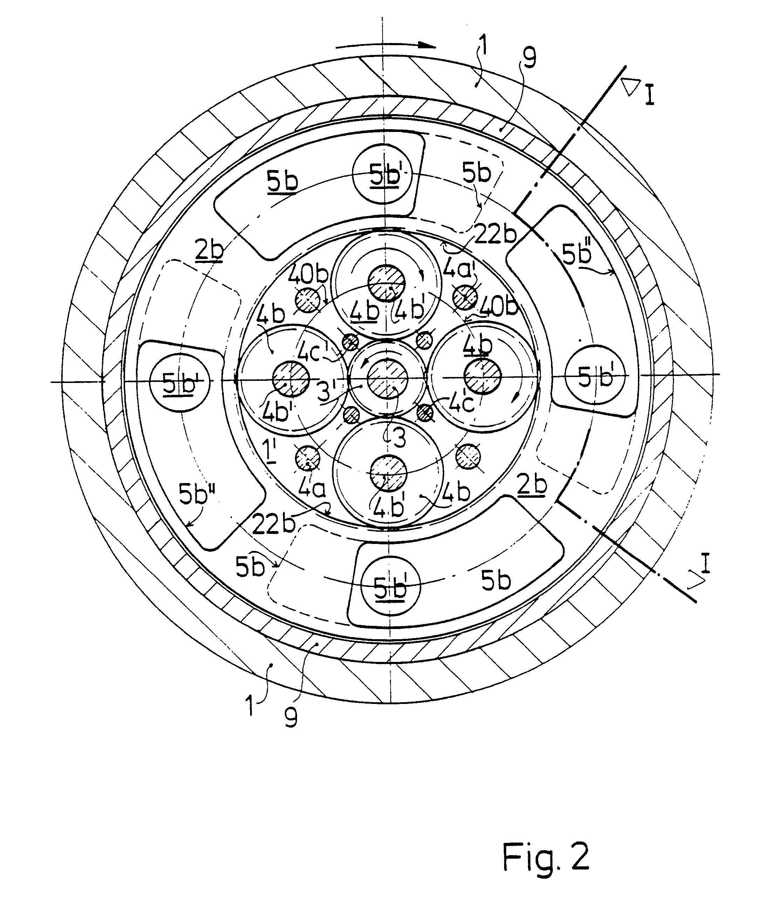

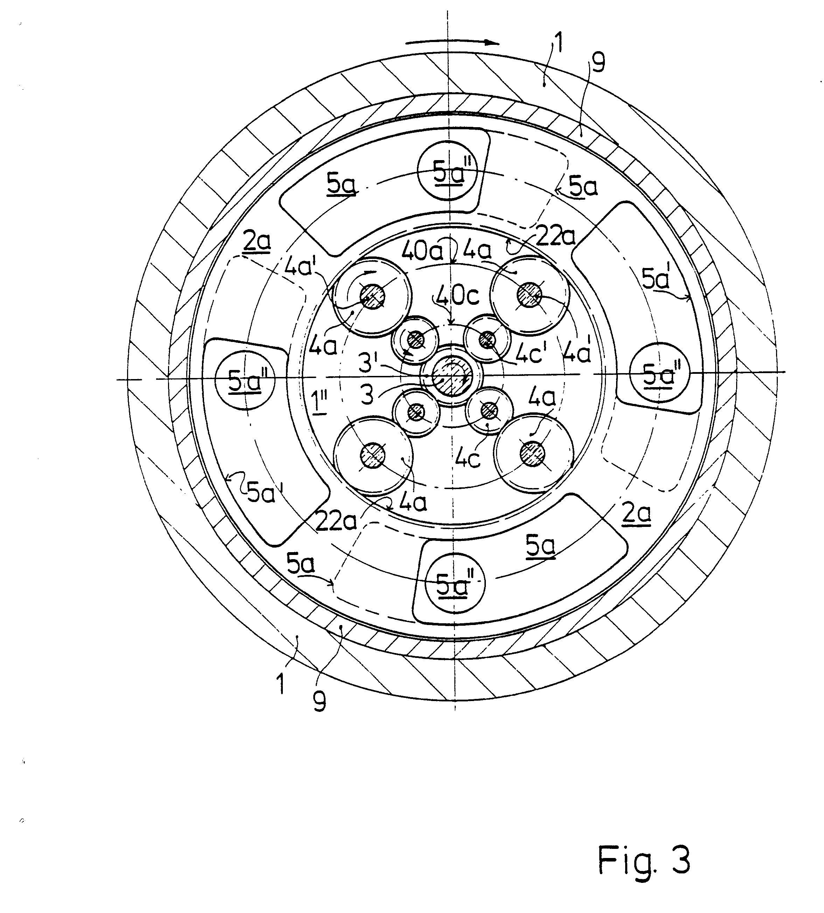

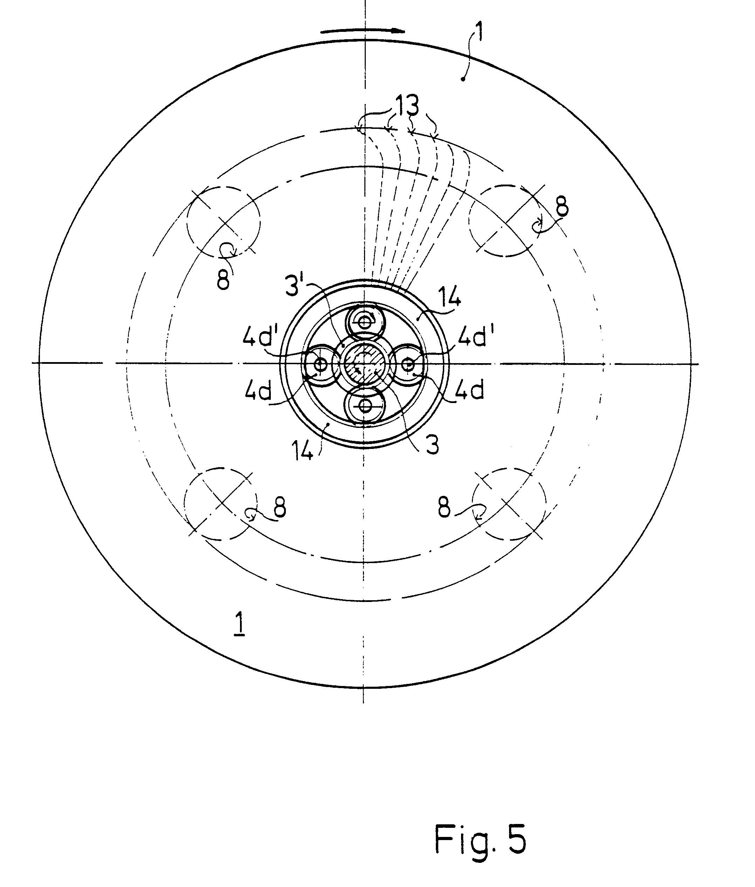

Die Kopplung der Scheibe 2b mit der Abtriebswelle 3 ist in Figur 2, die Kopplung der Scheibe 2a mit der Abtriebswelle 3 in Figur 3 und die Kopplung des Propellers 4 mit der Abtriebswelle 3 in Figur 5 dargestellt. In Figur 2 ist die Scheibe 2b mit Blick auf die auslaßseitige Stirnseite als innenverzahntes Hohlrad bzw. Ringscheibe dargestellt. Im Ringbereich der Scheibe 2b sind hier über den Umfang verteilt vier Teilbrennkammern 5b gezeigt. Jede der Teilbrennkammern hat eine etwa kreisförmig begrenzte Einlaßöffnung 5b' und eine etwa trapezförmig begrenzte Auslaßöffnung 5b''. Die Innenverzahnung 22b der Ringscheibe 2b ist mit einer Außenverzahnung 3' der Abtriebswelle 3 über vier Zahnräder 4b gekoppelt. Diese Zahnräder 4b sind in der Gehäusewand 1' gelagert. Die Lagerachsen 4b' der Zahnräder 4b sind auf einem Kreis bzw. Kranz 40b angeordnet. Durch die Zwischenschaltung eines Kranzes 40b von Zahnrädern 4b wird erreicht, daß die Drehrichtung der Scheibe 2b der Drehrichtung der Welle 3 entgegen gerichtet ist.

In Figur 3 ist die Scheibe 2a mit Blick auf die einlaßseitige Stirnseite als Hohlrad bzw. Ringscheibe dargestellt. Im Ringbereich sind über den Umfang verteilt vier Teilbrennkammern 5a angeordnet. Jede der Teilbrennkammern 5a weist eine etwa trapezförmig begrenzte Einlaßöffnung 5a' und eine etwa kreisförmig begrenzte Auslaßöffnung 5a'' auf. Die Innenverzahnung 22a der Scheibe 2a ist mit der Abtriebswelle 3 über Zahnräder 4a und 4c sowie über die Außenverzahnung 3' gekoppelt. Die Zahnräder 4a, 4c sind in zwei konzentrischen Kreisen bzw. Kränzen 40a, 40c angeordnet.

Die auf dem Kranz 40a über den Umfang verteilt angeordneten Zahnräder 4a sind über Achsen 4a' in den Gehäusewänden bzw. Platten 1', 1'' gelagert. Die auf dem Kranz 40c über den Umfang verteilt angeordneten Zahnräder 4c sind über Achsen 4c' in den vorgenannten Gehäusewänden 1',1'' gelagert. Durch die Zwischenschaltung von zwei Kränzen von Zahnrädern zwischen der Innenverzahnung 22a und der mit der Aussenverzahnung 3' versehenen Abtriebswelle 3 ist erreicht, daß die Drehrichtung der Scheibe 2a dieselbe ist wie die der Abtriebswelle 3.

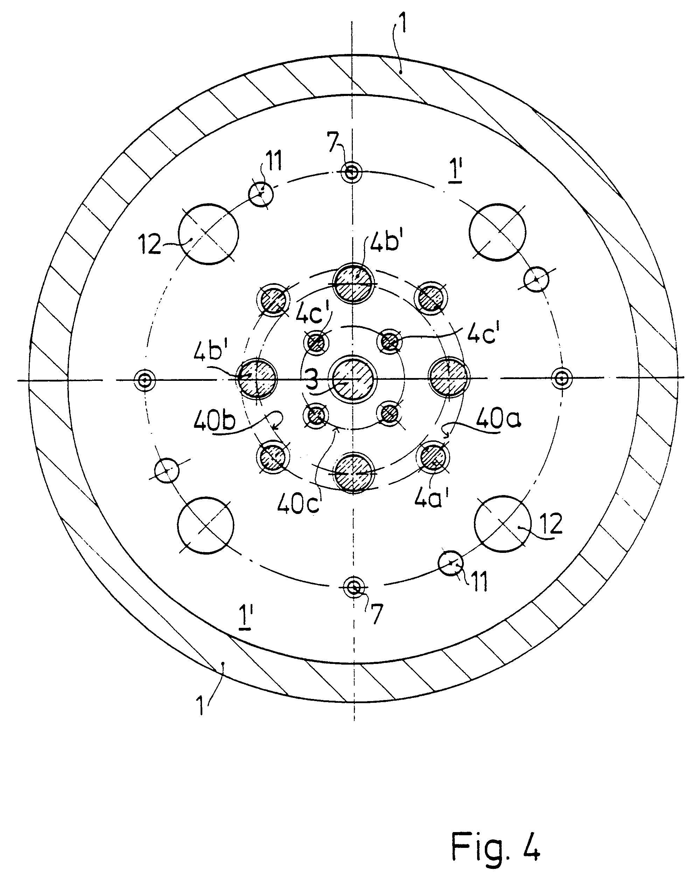

In Figur 4 ist die Gehäusewand 1' dargestellt und zwar mit Blick auf die der ersten Scheibe 2b zugewandten Stirnseite. Über den Umfang verteilt sind vier Einlässe 12, vier Kraftstoffeinspritz-Vorrichtungen 11 sowie vier Zündvorrichtungen 7 vorgesehen. Um die im Querschnitt gezeigte Abtriebswelle 3 sind drei Kränze 40c, 40a, 40b konzentrisch angeordnet. Auf jedem der Kränze sind über den Umfang verteilt vier Lagerstellen für die im Querschnitt gezeigten Lagerachsen 4a',4b',4c' vorgesehen.

Die Kopplung des Propellerrades 14 mit der Abtriebswelle 3 ist in analoger Weise wie die der ersten Scheibe 2b mit der Abtriebswelle 3 vorgegeben und aus Figur 5 ersichtlich. Das Propellerrad 14 weist eine Innenverzahnung 23 auf und ist mit dieser Innenverzahnung 23 über Zahnräder 4d mit einer Außenverzahnung 3' der Abtriebswelle 3 verbunden. Die Zahnräder 4d sind über Lagerachsen 4d' im Gehäuse 1 gelagert. Da die Innenverzahnung 23 über einen Kranz Zahnräder 4d mit der Außenverzahnung der Abtriebswelle 3 gekoppelt ist, ist die Drehrichtung des Propellerrades 14 stets eine andere als die der Welle 3.

Anhand der Brennkammer-Darstellung in Figur 1 wird die Funktionsweise des Gasturbinentriebwerks erläutert. Bei der Verbrennung eines Kraftstoff-Luft-Gemisches 6 entsteht innerhalb des Brennkammer 5 ein Überdruck. Dieser Druck wird erst dann abgebaut, wenn sich die letzte Scheibe 2a mit ihrer Teilbrennkammer 5a aus ihrer Position in Figur 1 durch eine Bewegung nach unten (siehe Pfeil auf Scheibe 2a) bewegt und dadurch die Auslaßöffnung 5a'' mit der Auslaßöffnung 8 in Verbindung tritt. Dabei besteht trotz der gegenläufigen Bewegung der ersten Scheibe 2b in diesem Augenblick immer noch eine Verbindung der beiden Teile der Brennkammern 5a, 5b durch Überlappung des trapezförmig begrenzten Auslasses 5b'' und des trapezförmig begrenzten Einlasses 5a'. Dies ist erforderlich, um auch die in der ersten Teilbrennkammer 5b befindlichen Verbrennungsgase über die Auslaßöffnung 8 nach außen abgeben zu können. Im Augenblick des Ausströmens der Verbrennungsgase wird durch die wegen des hohen Druckes in der Brennkammer mit hoher Geschwindigkeit austretenden Verbrennungsgase eine Kraft auf jede der beiden Scheiben 2a, 2b ausgeübt. Dabei ist die Kraft auf die Scheibe 2a entgegengesetzt gerichtet zu der Kraft auf die Scheibe 2b. Die erste Scheibe 2b wird dabei in Figur 1 gesehen nach oben (siehe Pfeil auf Scheibe 2b) und die zweite bzw. letzte Scheibe 2a nach unten gedreht. Die sich derart entwickelnde Kraft bzw. das Drehmoment wird - wie aus den Figuren 2 bis 4 konkretisiert dargestellt - von den Scheiben auf die Abtriebswelle übertragen.

Die Position der Einlaßöffnung 12 in der Gehäusewand 1' ist so gewählt, daß der Einlaß 5b' der ersten Teilbrennkammer 5b während der Drehbewegung der ersten Scheibe 2b mit der Einlaßöffnung 12 fluchtet. Dies geschieht bevor der Einlaß 5b die Kraftstoffeinspritz-Vorrichtung 11 und die Zündvorrichtung 7 passiert hat. Dadurch wird die erste Teilbrennkammer 5b über die Einlaßöffnung 12 von einem hier nicht dargestellten Verdichter bzw. Lader mit Luft beaufschlagt. Damit beide Teilbrennkammern 5a, 5b geladen werden können, ist es erforderlich, daß während der Beaufschlagung über die Einlaßöffnung 12 die beiden Teilbrennkammern 5a, 5b sich mindeätens teilweise mit den Öffnungen 5b'' und 5a' überlappen, damit auch in die zweite bzw. letzte Teilbrennkammer 5a Luft gelangen kann.

Die Verbrennungsgase strömen aus den Brennkammern über Auslaßöffnungen 8 etwa im rechten Winkel auf die Flügel 13 des nachgeschalteten Propellers 14 auf. Hierdurch läßt sich die Energie der mit hoher Geschwindigkeit ausströmenden Verbrennungsgase für die Antriebsleistung der Maschine nutzbar machen. Gleichzeitig wird die Geschwindigkeit der Verbrennungsgase herabgesetzt. Dies hat die Folge, daß eine erhebliche Reduzierung des Geräuschpegels der ausströmenden Gase gegeben ist. Die unter hohem Druck durch die Auslaßöffnungen 8 herausströsenden Gase versetzen den Propeller 14 in Rotation. Durch die Zahnradkopplung zwischen Propeller 14 und Abtriebswelle 3 wird das Drehmoment auf die Abtriebswelle 3 übertragen. Man erreicht dadurch eine Verbesserung des Wirkungsgrades und gleichzeitig erhält.man eine wesentliche Verminderung der Geschwindigkeit der durch die Auslaßöffnungen 8 freigesetzten Verbrennungsgase.

Zur Verdeutlichung des Weges des Kraftstoff-Luft-Gemisches innerhalb des Gasturbinentriebwerks sind Pfeile mit Dreiecksköpfen, die in die Strömungsrichtung des noch nicht verbrannten oder des bereits verbrannten Gemisches weisen, in Figur 1 eingetragen. Die Pfeile mit den schwarz ausgelegten Dreiecks-Köpfen deuten dagegen gegenläufige Bewegungsrichtungen der beiden Scheiben 2a, 2b sowie die des Propellers 14 an.

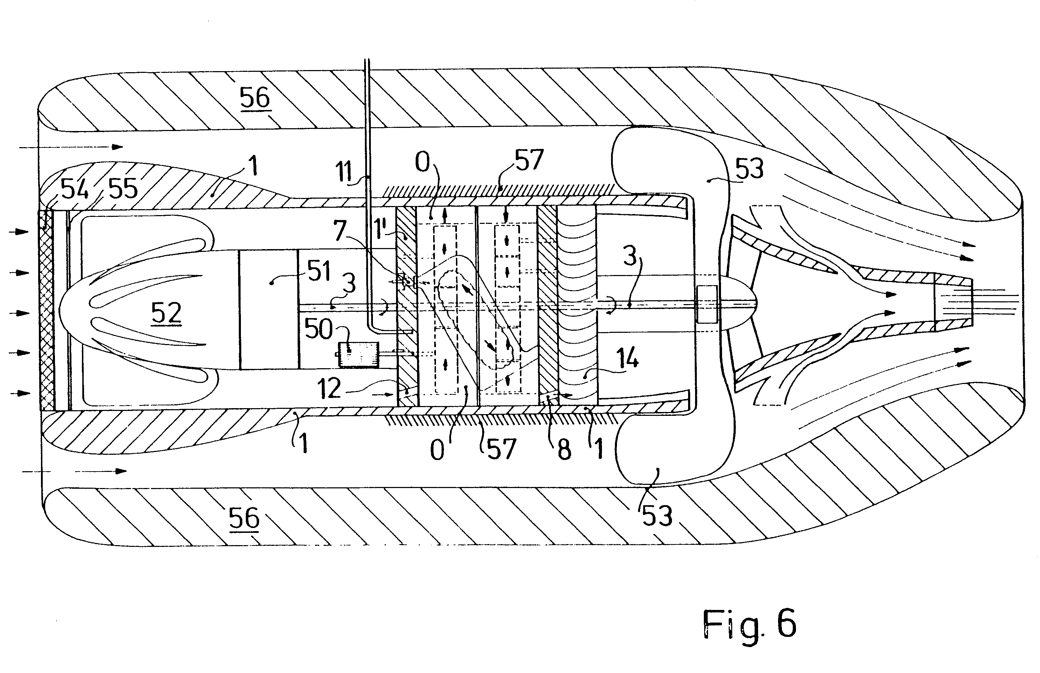

In Figur 6 ist in prinzipieller Weise eine Antriebseinheit gezeigt, in der ein Gasturbinentriebwerk O - wie es in den Figuren 1 bis 5 dargestellt ist - integriert ist. Es handelte sich hierbei um ein Zweikreis-Strahltriebwerk mit einer äußeren Luftförderung und einer inneren Luftförderung zur Gasturbine. In Figur 6 ist von links gesehen an der einlaßseitigen Gehäusewand 1' des Gasturbinentriebwerks O ein Anlasser 50 für das selbsttätige Starten des Triebwerks angeordnet. Die Welle des Anlassers 50 ist durch die Gehäuseplatte 1' geführt und wirkt auf die benachbarte erste Scheibe. Die das Gasturbinentriebwerk O durchsetzende Abtriebswelle 3 ist in Figur 6 gesehen links über ein Getriebe 51 mit einem Verdichter, nämlich einem Schraubenlader, 52, gekoppelt. Im in Figur 6 gesehen rechten Bereich ist die Abtriebswelle 3 mit verstellbaren Flügeln 43 gekoppelt. Im Bereich des Einlasses des Verdichters 52 ist ein Luftfilter 54 und ein Irisverschluß 55 angeordnet. Im Gehäuse 1 des Turbinentriebwerks O ist hier auch der Verdichter 52 sowie die dem Verdichter vorgeschalteten Luftfilter 54 und Verschluß 55 aufgenommen. Das Gehäuse 1 ist konzentrisch in einem rohrförmigen Gehäuse 56 angeordnet. Dabei ist zwischen der Innenwand des Gehäuses 56 und der Außenwand des Gehäuses 1 ein Zwischenraum belassen. Dieser Zwischenraum stellt einen ringförmigen Strömungskanal dar, der sich an der Auslaßseite - in Figur 6 gesehen rechts - düsenförmig verengt. Im Bereich des Gasturbinentriebwerks O sind am Gehäuse 1 an der Außenseite Kühlrippen 57 im Strömungskanal vorgesehen. In diesem Strömungskanal bewegen sich die verstellbaren Flügel 53 eines Turbopropellers, der in seinem mittleren Bereich von den Verbrennungsgasen durchströmt wird, die aus dem Gasturbinentriebwerk O ausgestoßen worden sind und den Propeller 14 passiert haben.

Die erste Scheibe im Gasturbinentriebwerk wirkt als Rückdruckturbine. Die zweite Scheibe wirkt als Reaktionsturbine, bei welcher wie bei einem Turbinenrotor die Strömungsenergie der Verbrennungsgase unmittelbar in Rotationsenergie umgesetzt wird.

**Patentansprüche**

1. Gasturbinentriebwerk mit intermittierender Verbrennung mit folgenden Merkmalen:

a. In einem Gehäuse (1) sind mindestens zwei runde Scheiben (2b, 2a) dicht nebeneinander, konzentrisch zu einer Abtriebswelle (3) und relativ zueinander drehbar angeordnet, wobei die Abtriebswelle mit wenigstens einem Wellenende aus dem Gehäuse ragt;

b. im Umfangsbereich einer ersten Scheibe (2b) sind wenigstens eine, verzugsweise mehrere, über den Umfang verteilt angeordnete erste Teilbrennkammern (5b) ausgebildet, die auf der dem Gehäuse zugewandten äußeren Stirnseite der ersten Scheibe jeweils einen periodisch mit einem Verdichter in Verbindung stehenden Einlaß (5b') und auf der der benachbarten Scheibe (2a) zugewandten Stirnseite der ersten Scheibe (2b) jeweils einen in Drehrichtung der zweiten Scheibe (2a) geneigt angeordneten Auslaß (5b'') aufweisen;

c. in den auf die erste Scheibe (2b) folgenden Scheiben (2a) ist jeweils eine der Zahl der ersten Teilbrennkammern (5b) gleiche Zahl von weiteren Teilbrennkammern (5a) ausgebildet, deren Einlaß (5a') jeweils an den Auslaß (5b'') der Teilbrennkammern (5b) der vorhergehenden Scheibe (2b) angepaßt ist, damit während der Umdrehung der Scheiben (2b, 2a) die Ein- und Auslässe der Teilbrennkammern (5b, 5a) zum Bilden einer sich über alle Scheiben (2b, 2a) erstreckenden vollständigen Brennkammer fluchten, und deren Auslaß (5a'') an der dem Einlaß (5a') gegenüberliegenden Stirnseite der Scheibe (2a) entgegen der Drehrichtung dieser Scheibe geneigt ist, wobei zwischen dem Einlaß (5a') und dem Auslaß (5a'') der weiteren Teilbrennkammern (5a) eine Umlenkung der Verbrennungsgase erfolgt,

d. die letzte Scheibe (2a) liegt mit ihrer äußeren Stirnseite dicht an einer benachbarten Gehäusewand (1'') des Gehäuses (1) 4n. wobei die Auslässe (5a'') der letzten Teilbrennkammern (5a) in der letzten Scheibe (2a) während ihrer Umdrehung periodisch mit in der benachbarten Gehäusewand (1'') befindlichen Auslaßöffnungen (8) für Verbrennungsgase in Verbindung stehen;
<u>dadurch gekennzeichnet,</u>

e. daß benachbarte Scheiben (2b, 2a) in entgegengesetztem Drehsinn drehbar und alle Scheiben mit der Abtriebswelle (3) diese im selben Drehsinn antreibend verbunden sind,

f. daß zwischen dem Einlaß (5b') und dem Auslaß (5b'') der ersten Teilbrennkammern (5b) eine Umlenkung der Verbrennungsgase erfolgt und die Umlenkung in Teilbrennkammern (5b, 5a) benachbarter Scheiben (2b, 2a) entgegengesetzt ist, g. daß die erste Scheibe (2b) mit ihrer äußeren Stirnseite dicht an einer benachbarten Gehäusewand (1') des Gehäuses (1) anliegt, welche Einlaßöffnungen (12, 11) zur Zufuhr von Luft-Brennstoff-Gemisch bzw. Luft sowie Brennstoff bzw. zum periodischen Verbinden der Einlässe (5b') mit dem Verdichter und gegebenenfalls eine Zündvorrichtung (7) aufweist, und

h. daß die relativen Bewegungen der Scheiben (2b, 2a) zueinander und gegenüber dem Gehäuse (1) derart aufeinander abgestimmt sind, daß in der Zündphase die ersten Teilbrennkammern (5b) einlaßseitig geschlossen und auslaßseitig mit den letzten Teilbrennkammern (5a) verbunden sind, die in dieser Phase auslaßseitig geschlossen sind, und daß noch während der Verbindung der ersten und letzten Teilbrennkammern (5b, 5a) der Auslaß (5a'') der letzten Teilbrennkammern (5a) geöffnet wird.

2. Gasturbinentriebwerk nach Anspruch 1, dadurch gekennzeichnet, daß die Scheiben (2b, 2a) als innenverzahnte Räder ausgebildet sind und direkt oder über ein Getriebe mit der Abtriebswelle (3) gekoppelt sind.

3. Gasturbinentriebwerk nach Anspruch 1, dadurch gekennzeichnet, daß die Zahl der Einlaßöffnungen (12) in der einlaßseitigen Gehäusewand (1') und die Zahl der Auslaßöffnungen (8) in der auslaßseitigen Gehäusewand (1'') gleich der Zahl der Teilbrennkammern (5b, 5a) pro Scheibe (2b, 2a) ist.

4. Gasturbinentriebwerk nach Anspruch 1, dadurch gekennzeichnet, daß die Umlenkung zwischen Einlaß (5b', 5a') und Auslaß (5b'', 5a'') der Teilbrennkammern (5b, 5a) 90 Grad beträgt.

5. Gasturbinentriebwerk nach Anspruch 1, dadurch gekennzeichnet, daß die Scheiben (2b, 2a) umfangsseitig im Gehäuse (1) gelagert sind.

## Claims

1. Gas turbine engine with intermittent combustion having the following features:

a. At least two circular discs (2b, 2a) are arranged in a casing (1) immediately adjacent to one another, concentrically to a driven shaft (3) and rotatable relative to one another, at least one end of the driven shaft protruding from the casing;

b. in the peripheral region of a first disc (2b) are formed at least one, preferably several, first partial combustion chambers (5b) distributed over the periphery, each of which partial combustion chambers has, on the outer end surface of the first disc facing towards the casing, an inlet (5b') periodically connected to a compressor and, on the end surface of the first disc (1b) facing towards the adjacent disc (2a), an outlet (5b'') inclined in the direction of rotation of the second disc (1a);

c. formed in each of the discs (2a) following the first disc (1b) there is a number of further partial combustion chambers (5a) equal to the number of first partial combustion chambers (5b), each of the inlets (5a') of which further partial combustion chambers being matched to the outlet (5b'') of the partial combustion chambers (5b) of the previous disc (2b) so that, during the revolution of the discs (2b, 2a), the inlets and outlets of the partial combustion chambers (5b, 5a) are aligned to form a complete combustion chamber which extends over all the discs (2b, 2a), and whose outlet (5a'') on the end surface of the disc (2a) opposite to the inlet (5a') is inclined against the direction of rotation of this disc, a deflection of the combustion gases taking place between the inlet (5a') and the outlet (5a'') of the further partial combustion chambers (5a);

d. the outer end surface of the last disc (2a) is located close to an adjacent casing wall (1'') of the casing (1), the outlets (5a'') of the last partial combustion chambers (5a) in the last disc (2a) being periodically connected to combustion gas outlet openings (8) in the adjacent casing wall (1'') during their revolution;

characterized in that,

e. the adjacent discs (2b, 2a) can be rotated in opposite directions of rotation, and all the discs are connected to the driven shaft (3) so as to drive the latter in the same direction of rotation,

f. deflection of the combustion gases takes place between the inlet (5b') and the outlet (5b'') of the first partial combustion chambers (5b), and the deflection in the partial combustion chambers (5b, 5a) of adjacent discs (2b, 2a) is opposed,

g. the outer end surface of the first disc (2b) is located close to the adjacent casing wall (1') of the casing (1), which casing wall has inlet openings (12, 11) for the supply of air/fuel mixture and/or of air and fuel and/or for the periodic connection of the inlets (5b') to the compressor, and has, if necessary, an ignition device (7), and

h. the motions of the discs (2b, 2a) relative to one another and relative to the casing (1) are mutually matched in such a way that in the ignition phase the first partial combustion chambers (5b) are closed on the inlet side and are connected on the outlet side to the last partial combustion chambers (5a), which in this phase are closed on the outlet side, and in that, during the connection between the first and the last partial combustion chambers (5b, 5a) the outlet (5a'') of the last partial combustion chambers (5a) is still opened.

2. Gas turbine engine according to claim 1, characterized in that the discs (2b, 2a) are designed as gear wheels with internal teeth and are coupled to the driven shaft (3) either directly or via a gear.

3. Gas turbine engine according to claim 1, characterized in that the number of the inlet openings (12) in the inlet-side casing wall (1') and the number of outlet openings (8) in the outlet-side casing wall (1'') is equal to the number of partial combustion chambers (5b, 5a) per disc (2b, 2a).

4. Gas turbine engine according to claim 1, characterized in that the deflection between the inlet (5b', 5a') and the outlet (5b'', 5a'') of the partial combustion chambers (5b, 5a) amounts to 90 degrees.

5. Gas turbine engine according to claim 1, characterized in that the discs (2b, 2a) are supported at their periphery in the casing (1).


**Revendications**

1. Turbine à gaz à combustion intermittente avec les caractéristiques suivantes:

a. deux disques circulaires au moins (2b, 2a), concentriques à un arbre de sortie (3) et dotés d'une possibilité de rotation relative, sont étroitement juxtaposés dans un carter (1), une extrémité au moins de l'arbre de sortie dépassant du carter;

b. dans la zone périphérique d'un premier disque (2b), une chambre au moins, de préférence plusieurs chambres de combustion partielles (5b) sont réparties sur le pourtour et présentent respectivement, sur la face frontale externe du premier disque, tournée vers le carter, une admission (5b') reliée périodiquement à un compresseur, ainsi qu'un échappement (5b''), disposé sur la face frontale du premier disque (2b), tournée vers le disque adjacent (2a), et incliné dans le sens de rotation du deuxième disque (2a);

c. les disques (2a) postérieurs au premier disque (2b) comportent plusieurs autres chambres de combustion partielles (5a), dont le nombre est égal à celui des premières chambres (5b), dont l'admission (5a') est respectivement adaptée à l'échappement (5b'') des chambres de combustion partielles (5b) du disque précédent (2b), afin que les admissions et échappements des chambres de combustion partielles (5b, 5a) s'alignent, pendant la rotation des disques (2b, 2a), pour former une chambre de combustion intégrale, s'étendant sur tous les disques (2b, 2a), et dont l'échappement (5a''), prévu sur la face frontale du disque (2a), opposée à l'admission (5a'), est incliné dans le sens inverse au sens de rotation de ce disque, les gaz de combustion étant déviés entre l'admission (5a') et l'échappement (5a'') des autres chambres de combustion partielles (5a);

d. la face frontale externe du dernier disque (2a) s'applique sur une paroi (1'') adjacente du carter (1), les échappements (5a'') des dernières chambres de combustion partielles (5a), prévues dans le dernier disque (2a), étant reliés périodiquement, pendant la rotation de ce dernier, aux orifices de sortie (8) des gaz de combustion, situés dans la paroi (1'') adjacente du carter;

caractérisée,

e. en ce que les disques adjacents (2b, 2a) ont un sens de rotation opposé, tous les disques, reliés à l'arbre de sortie (3), entraînant ce dernier dans le même sens de rotation,

f. en ce que les gaz de combustion sont déviés entre l'admission (5b') et l'échappement (5b'') des premières chambres de combustion partielles (5b), le sens de la déviation étant opposé dans les chambres de combustion partielles (5b, 5a) des disques adjacents (2b, 2a),

g. en ce que la face frontale externe du premier disque (2b) s'applique contre une paroi (1') adjacente du carter (1), cette paroi présentant des orifices d'admission (12, 11) pour l'arrivée du mélange air/combustible et/ou pour l'alimentation en air et en combustible et/ou pour la liaison périodique des admissions (5b') avec le compresseur et, éventuellement, un dispositif d'allumage (7), et

h. en ce que les mouvements relatifs des disques (2b, 2a), l'un par rapport à l'autre et par rapport au carter (1), sont adaptés mutuellement de manière que les premières chambres de combustion (5b), dans la phase d'allumage, soient fermées côté admission et reliées côté échappement aux dernières chambres de combustion partielles (5a), qui sont fermées côté échappement dans la phase précitée, et de manière que l'échappement (5a'') des dernières chambres de combustion partielles (5a) soit encore ouvert pendant la liaison des premières et des dernières chambres de combustion partielles (5b, 5a).

2. Turbine à gaz suivant la revendication 1, caractérisée en ce que les disques (2b, 2a) sont réalisés sous forme de roues à dentures intérieures et sont couplés directement, ou par l'intermédiaire d'une transmission, à l'arbre de sortie (3).

3 Turbine à gaz suivant la revendication 1, caractérisée en ce que le nombre des orifices d'admission (12), prévus dans la paroi (1') du carter côté admission, d'une part, le nombre des orifices de sortie (8), prévus dans la paroi (1'') du carter côté échappement, d'autre part, sont égaux au nombre des chambres de combustion partielles (5b, 5a) dans chaque disque (2b, 2a).

4. Turbine à gaz suivant la revendication 1, caractérisée en ce que la déviation entre l'admission (5b', 5a') et l'échappement (5'', 5a'') des chambres de combustion partielles (5b, 5a) est égale à 90°.

5. Turbine à gaz suivant la revendication 1, caractérisée en ce que les disques (2b, 2a) sont supportés côté pourtour dans le carter (1).

Fig. 1

Fig. 2

Fig. 3

Fig. 4

7

Fig. 5

Fig. 6